(19) Europäisches Patentamt
European Patent Office
Office européen des brevets

(11) **EP 3 967 653 A1**

(12) **EUROPEAN PATENT APPLICATION**

(43) Date of publication:
**16.03.2022  Bulletin 2022/11**

(21) Application number: **20195765.1**

(22) Date of filing: **11.09.2020**

(51) International Patent Classification (IPC):
**C01B 3/12** (2006.01)      **B01D 53/047** (2006.01)
**C01B 3/56** (2006.01)      **C01B 32/50** (2017.01)

(52) Cooperative Patent Classification (CPC):
**C01B 3/12; B01D 53/047; C01B 3/56; C01B 32/50;**
C01B 2203/043; C01B 2203/82

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nederlandse Organisatie voor toegepast-natuurwetenschappelijk onderzoek TNO
2595 DA 's-Gravenhage (NL)**

(72) Inventor: **The designation of the inventor has not yet been filed**

(74) Representative: **Nederlandsch Octrooibureau
P.O. Box 29720
2502 LS The Hague (NL)**

(54) **SORPTION-ENHANCED WATER-GAS SHIFT PROCESS FOR THE FORMATION OF A CO2 PRODUCT STREAM AND AN H2 PRODUCT STREAM**

(57)    The present invention concerns a sorption-enhanced water-gas shift (SEWGS) process for the formation of a $CO_2$ product stream and an $H_2$ product stream, comprising (a) a reaction step, wherein a feed gas comprising $CO_x$, wherein $x = 1 - 2$, and $H_2O$ is fed into a SEWGS reactor containing a catalyst and sorbent material capable of adsorbing $CO_2$, thereby forming the $H_2$ product stream and a sorbent material loaded with $CO_2$; (b) a rinse step, wherein steam is fed to the SEWGS reactor, thereby establishing a pressure in the range of 5 - 50 bar; (c) a pre-blowdown step, wherein the pressure in the SEWGS reactor is reduced to establish a blowdown pressure in the range of 0.5 - 1.5 times the partial pressure of CO and $CO_2$ in the feed gas of step (a); (d) a blowdown step, wherein the pressure in the SEWGS reactor is reduced to the regeneration pressure in the range of 1 - 5 bar, thereby releasing at least part of the $CO_2$ from the loaded sorbent material, thereby forming the $CO_2$ product stream; and (e) a purge step, wherein steam is fed to the SEWGS reactor, thereby releasing further $CO_2$ molecules from the SEWGS reactor, wherein the off gas released from the reactor during step (c) is collected separately from the $CO_2$ product stream released from the reactor during step (d). The separate collection of the off gas of pre-blowdown step (c) affords a highly efficient process with excellent $CO_2$ purity and carbon capture ratio.

EP 3 967 653 A1

## Description

### Field of the invention

The present invention is in the field of syngas treatment and relates to a sorption-enhanced water-gas shift (SEWGS) process for the formation of a $CO_2$ product stream and an $H_2$ product stream which requires much less steam than conventional processes.

### Background art

Energy-intensive sectors such as steel, refining and chemical industries are still largely dependent on fossil fuels and raw materials, so that it remains important to capture and reuse the released $CO_2$. Unused $CO_2$ can be stored safely, for example in depleted natural gas fields in the North Sea. In the long term, negative $CO_2$ emissions may become the target, which can be obtained by, for example, storing the released $CO_2$ in the use of biomass. The overall reduction in the $CO_2$ emitted into the atmosphere is one of the major challenges in the present-day society, especially for industries where large amounts of carbon atoms remain as side-product, which are typically emitted as $CO_2$.

Sorption-enhanced water-gas shift (SEWGS) has been developed for the conversion of CO to $H_2$ and $CO_2$, allowing the formation of a $CO_2$ product stream and an $H_2$ product stream, wherein $CO_2$ is captured by means of adsorption, and can then be stored or reused. This process can be employed to purify the $H_2$ gas in a syngas mixture containing CO and/or $CO_2$, to obtain a $H_2$ product stream and a by-product stream wherein the incoming carbon atoms are captured in a $CO_2$ stream. The $CO_2$ product stream may then be subjected to $CO_2$ storage and as such eliminate $CO_2$ emissions into the atmosphere.

In the art, high-pressure steam supply in hydrogen production processes is made more efficient by a water gas shift process which comprises (i) a reaction stage wherein a feed gas comprising CO and $H_2O$ is fed into a water gas shift reactor column containing a sorbent material capable of adsorbing $CO_2$ and wherein a product gas issuing from the reactor is collected, (ii) a rinse stage wherein high pressure steam is fed to the column, (iii) one or more pressure equalisation steps wherein the high-pressure column is connected to a column in another stage of the cycle at lower pressure and requiring repressurisation, (iv) a blowdown step wherein the pressure in the column is reduced to the regeneration pressure, (v) a regeneration stage wherein $H_2O$ is fed (i.e. a purge stage) and $CO_2$ is removed from the reactor, (vi) one or more pressure equalisation steps wherein the column is repressurised with gas from a column at a higher pressure in another stage of the cycle and requiring depressurisation, and (vii) a final repressurisation step in which the pressure in the column is raised to the reaction stage pressure.

Existing SEWGS processes operate economically under steam consumption constraints. SEWGS cycle design therefore involves minimising the steam consumption during the rinse and purge stages while achieving desirable product specifications in terms of e.g. carbon capture ratio (CCR), carbon dioxide purity (CP), $H_2$ recovery (HR) and/or hydrogen purity (HP). A high CCR and high CP can be achieved, but generally at the expense of a certain CAPEX (number of SEWGS columns) and OPEX (steam consumption).

WO 2010/059055 (EP 2362848) discloses a water gas shift process with a reaction stage, wherein the reaction stage comprises (a) providing a gas mixture comprising CO, $H_2O$ and an acid gas component to a reactor containing an adsorbent, and (b) subjecting the gas mixture to water gas shift reaction conditions to perform the water gas shift reaction. The adsorbent used in WO 2010/059055 comprises an alkali promoted hydrotalcite material, and the acid gas component comprises H2S.

EP 2739373 discloses a water gas shift (WGS) process for the removal of acidic gases by adsorption, and relies on the selective desorption of adsorbed acidic gases from adsorbents that are suitably used in such processes. In such processes using basic adsorbents, acidic gaseous components such as carbon dioxide and hydrogen sulphide end up in the same product (or effluent) stream, which makes reuse or purification of these streams difficult. EP 2739373 introduced a stepwise and selective removal of gaseous acidic species for adsorbents used for producing desirable especially hydrogen-containing-gas mixtures by conducting a purging stage in two steps, thereby obtaining two different product gases. In this way an impurity (H2S) can be removed, such that the $CO_2$ purity (CP) in the final product gas is increased.

WO 2013/122467 discloses that the high-pressure steam supply in a hydrogen production process can be made more efficient by a water gas shift process which comprises, in alternating sequence (i) a reaction stage wherein a feed gas comprising CO and $H_2O$ is fed into a water gas shift reactor containing a sorbent material capable of adsorbing $H_2O$ and $CO_2$ and wherein a product gas issuing from the reactor is collected, (ii) a regeneration stage wherein $CO_2$ is removed from the reactor, (iii) a loading stage, wherein $H_2O$ is fed into the reactor, wherein said feed gas mixture has a molar ratio of $H_2O$ to CO below 1.2, and the loading stage is performed at a lower pressure than the pressure of the reaction stage.

Boon et al. (Chemical Engineering Science 122, 2015, 219-231) published a research article on high-temperature pressure swing adsorption cycle design for sorption-enhanced water gas shift. The article describes a SEWGS process which combines the water-gas shift reaction with in situ adsorption of $CO_2$ on potassium-promoted hydrotalcite and thereby allows production of hot, high-pressure $H_2$ from syngas in a single unit operation. In this study, SEWGS is run as a cyclic process that comprises high-pressure adsorption and rinse stages, combined with pressure equalisation steps and purge at low pressure. The authors have shown that during the cycle, steam adsorbs in the rinse step and desorbs during the subsequent reduction in pressure, thereby improving the $CO_2$ purity in the column and enhancing the efficiency of the rinse stage. Numerical simulations showed that the carbon capture ratio depends mainly on the purge steam to carbon feed ratio, whereas the $CO_2$ product purity depends mainly on the rinse steam to carbon feed ratio. Optimisation of the process parameters provided a SEWGS cycle that consumes significantly less steam than cycle designs known until then, and significantly less energy than $CO_2$ separation technologies known until then. The present invention relates to a SEWGS cycle with reduced CAPEX and/or OPEX for a given performance in terms of CCR and CP.

There nevertheless remains a general need to further improve the existing SEWGS processes in terms of operational economy, sustainable use of resources and overall cost. For example, a specific challenge remains to simultaneously achieve both a high CCR and a high CP in SEWGS processes at substantially lower steam use, while providing an $H_2$ product stream that is suitable for further industrial, chemical processes. The process according to the invention provides in this need.

**Summary of the invention**

Accordingly, the invention provides a sorption-enhanced water-gas shift (SEWGS) process for the formation of a $CO_2$ product stream and an $H_2$ product stream, wherein the process comprises:

(a) a reaction step, wherein a feed gas comprising $CO_x$, wherein x = 1 - 2, and $H_2O$ is fed into a SEWGS reactor containing a catalyst and sorbent material capable of adsorbing $CO_2$, thereby forming the $H_2$ product stream and a sorbent material loaded with $CO_2$;
(b) a rinse step, wherein steam is fed to the SEWGS reactor, thereby establishing a pressure between 5 and 50 bar;
(c) a pre-blowdown step, wherein the pressure in the SEWGS reactor is reduced to establish a blowdown pressure in the range of 0.5 to 1.5 times the partial pressure of CO and $CO_2$ in the feed gas of step (a);
(d) a blowdown step, wherein the pressure in the SEWGS reactor is reduced to the regeneration pressure in the range of 1 to 5 bar, thereby releasing at least part of the $CO_2$ from the loaded sorbent material, thereby forming the $CO_2$ product stream; and
(e) a purge step, wherein steam is fed to the SEWGS reactor, thereby releasing further $CO_2$ molecules from the SEWGS reactor.

The present inventors have found that both a high carbon capture ratio (CCR) and carbon dioxide purity (CP) in SEWGS processes can be achieved with significant reduced amount of steam than conventional processes, while providing an $H_2$ product stream of high purity that is suitable for further industrial, chemical processes, by employing a pre-blowdown step, which is employed before a blowdown step. During the pre-blowdown step, the pressure in the SEWGS reactor is reduced to a total pressure in the range of 5 to 50 bar.

The process according to the invention hence incorporates a pre-blowdown step in an SEWGS process, which represents an intermediate step enabling the collection of impurities. The pre-blowdown step also allows for a simultaneous improvement of the carbon capture ratio (CCR) and the carbon dioxide purity (CP) in the overall SEWGS process at reduced steam usage. The pre-blowdown step differs from a pressure equalisation step in that the released gas is not kept in the pressure equalisation cycle, but instead the released gas is collected separately.

**Brief description of the drawings**

The present invention will be discussed in more detail below, with reference to the attached drawings, in which:

Figure 1 depicts the carbon capture ratio (CCR) and carbon dioxide purity (CP) in a SEWGS cycle according to the invention depending on the employed blowdown pressure at the end of the pre-blowdown step, simulated at a total feed flowrate of 3.42 kmol/h.
Figure 2 depicts the carbon capture ratio (CCR) and carbon dioxide purity (CP) in a SEWGS cycle according to the invention depending on the employed blowdown pressure at the end of the pre-blowdown step, simulated at a total feed flowrate of 1.71 kmol/h.
Figure 3 demonstrates the effect of increasing stream introduction during rinse, represented as total S/C, on the carbon capture ratio (CCR) and carbon dioxide purity (CP) in a process without pre-blowdown step (solid dots), compared to the process according to the invention comprising a pre-blowdown step (open dots).

**Description of embodiments**

The invention provides a sorption-enhanced water-gas shift (SEWGS) process for the formation of an intermediate stream, a $CO_2$ product stream and an $H_2$ product stream. The inventors have found that an optimization of the regeneration of the SEWGS reactor, after the water-gas shift reaction has been performed, enables the formation of a substantially pure $CO_2$ product stream and a substantially pure $H_2$ product stream. This optimization step resides in a pre-blowndown step, wherein the pressure is reduced to close to the regeneration pressure. The off gas released from the reactor during the pre-blowdown step is collected separately from the CO2 product stream released from the reactor during the blowdown step.

The reaction pressure is the pressure during step (a); the pre-blowdown pressure is the pressure at which the pre-blowdown step begins; the blowdown pressure is the pressure at which the pre-blowdown step ends and the blowdown step begins; and the regeneration pressure is the pressure at the end of the blowdown step.

More specifically, the process according to the invention comprises:

(a) a reaction step, wherein a feed gas comprising $CO_x$, wherein $x = 1 - 2$, and $H_2O$ is fed into a SEWGS reactor containing a catalyst and sorbent material capable of adsorbing $CO_2$, thereby forming the $H_2$ product stream and a sorbent material loaded with $CO_2$;
(b) a rinse step, wherein steam is fed to the SEWGS reactor, thereby establishing a pressure between 5 and 50 bar;
(c) a pre-blowdown step, wherein the pressure in the SEWGS reactor is reduced to establish a blowdown pressure in the range of 0.5 to 1.5 times the partial pressure of $CO_x$ in the feed gas of step (a);
(d) a blowdown step, wherein the pressure in the SEWGS reactor is reduced to the regeneration pressure in the range of 1 to 5 bar, thereby releasing at least part of the $CO_2$ from the loaded sorbent material, thereby forming the $CO_2$ product stream; and
(e) a purge step, wherein steam is fed to the SEWGS reactor, thereby releasing further $CO_2$ molecules from the SEWGS reactor.

The present inventors have found that both a high carbon capture ratio (CCR) and carbon dioxide purity (CP) in SEWGS processes can be achieved, while providing an $H_2$ product stream that is suitable for further industrial, chemical processes, by employing a pre-blowdown step, which is employed before a blowdown step. During the pre-blowdown step, the pressure in the SEWGS reactor is reduced to establish a blowdown pressure in the range of 0.5 to 1.5 times the partial pressure of CO and $CO_2$ in the feed gas of step (a). The pre-blowdown step is thus characterised by a decreased initial blowdown pressure as compared to the blowdown pressure of the actual blowdown step, wherein the pressure in the SEWGS reactor is reduced to the regeneration pressure which is between 1 and 5 bar.

*Step (a): Reaction*

In step (a), the water-gas shift reaction takes place. A feed gas comprising $CO_x$, wherein $x = 1 - 2$, and $H_2O$ is fed into a SEWGS reactor containing a catalyst and sorbent material capable of adsorbing $CO_2$. The $CO_2$ molecules formed during the water-gas shift reaction and/or present in the feed are sorbed onto the sorbent material, thereby forming a sorbent material loaded with $CO_2$. Typically, at the beginning of step (a), the sorbent material contains sorbed water molecules. During step (a) water molecules are desorbed and $CO_2$ molecules are adsorbed. As such, $CO_2$ is removed from the product mixture of the water-gas shift reaction, thereby pushing the equilibrium towards the product side. The off gas of the reactor during step (a) will thus contain $H_2$ and desorbed molecules, typically steam.

Such sorption-enhanced water-gas shift reactions are known in the art. Step (a) can be performed in any way known in the art. The skilled person is capable of selecting an appropriate sorbent material and catalyst, as well as appropriate conditions for performing the water-gas shift reaction. In a preferred embodiment, the reaction of step (a) is performed at a reaction pressure in the range of 15 - 50 bar, preferably in the range of 20 - 30 bar, most preferably in the range of 22 - 25 bar.

The feed comprises $CO_x$, wherein $x = 1 - 2$, and $H_2O$, and typically further comprises $H_2$. $CO_x$ denotes CO, $CO_2$ or mixtures thereof, and may also be referred to as "carbon oxide", with CO and $CO_2$ being the two carbon oxide species, or as "CO and/or $CO_2$". The value of $x$ denotes the number of oxygen atoms present per carbon atom in the carbon oxide fraction (i.e. CO + $CO_2$) of the feedstock, irrespective of any further oxygen and/or carbon atoms that may be present in the feedstock. Thus, $x$ is in the range of 1 - 2, wherein $x = 1$ indicates pure CO and $x = 2$ indicates pure $CO_2$. An intermediate value for x indicates that a mixture of CO and $CO_2$ is present in the feedstock, which can readily be determined by the skilled person. As example, when $x = 1.9$, 1.9 oxygen atoms are present per carbon atom, meaning that the molar ratio of $CO:CO_2$ is 1:9. Likewise, when $x = 1.5$, the $CO:CO_2$ molar ratio is 1:1.

The process according to the invention operates efficiently using a feedstock wherein $x$ is any value in the range 1 - 2. In one embodiment, the feedstock contains CO, or in other words $x < 2$, i.e. $1 \le x < 2$. In one embodiment, $CO_2$ may be the major carbon oxide species and $x$ is close to 2, e.g. $x = 1.3 - 2$, preferably $x = 1.4 - 1.8$. In an alternative embodiment, CO may be the major carbon oxide species and $x$ is close to 1, e.g. $x = 1 - 1.8$, preferably $x = 1 - 1.5$, more preferably $x = 1 - 1.2$, or even $x = $ about 1.

Alternatively worded, the feedstock contains 0 - 10 mol% CO and 0 - 80 mol% $CO_2$, wherein the total content of $CO_x$ in the feedstock is at least 2 mol%, preferably in the range of 2 - 80 mol%, more preferably 2 - 60 mol%. Preferably, the feedstock contains 2 - 8 mol% CO and 0 - 30 mol% $CO_2$, wherein the total content of $CO_x$ in the feedstock is preferably in the range of 2 - 20 mol%, more preferably 3 - 10 mol%.

A certain amount of $CO_2$ may thus be present in the feed. Any $H_2$ and $CO_2$ is not converted in the process according to the invention, but ends up in respectively the $H_2$ product stream or the $CO_2$ product stream. The feed may also contain further gaseous components which are inert in the reaction according to the invention, such as inert gases (e.g. $N_2$, Ar, $CH_4$ and larger hydrocarbons, such as up to $C_4$) and contaminants arising from the industrial process, such as syngas originating from reforming or gasification of fossil or biogenic feedstocks, from which the feed originates (e.g. $H_2S$, $NO_x$, etc.). Important for the operation of the process, especially for the pre-blowdown step (c), is the partial pressure of the sum of CO and $CO_2$ (i.e. of $CO_x$) in the feed. Since all CO will be converted to $CO_2$ during step (a), this represents the amount of $CO_2$ present in the system and to be collected during the regeneration steps (b) - (e). The inventors found that the performance of the process, in terms of CCR and CP, was optimal when the blowdown pressure was chosen to be close to the amount of $CO_2$ present in the system, i.e. close to the partial pressure of $CO_x$ in the feed of step (a). Typically, the partial pressure of $CO_x$ in the feed is in the range of 1 - 50 bar, preferably 2 - 20 bar, more preferably 5 - 15 bar, most preferably about 10 bar. As such, the majority of the $CO_2$ will still be in the reactor at the beginning of blowdown step (d) and collected in the $CO_2$ product stream, while other components and impurities are largely removed from the system, mainly in the pre-blowdown off-gas.

The off gas of the reaction step (a) forms the $H_2$ product stream, and contains $H_2$ and desorbed molecules, and optionally any inert gases that are present in the feed and defined elsewhere. The $H_2$ product stream may be subjected to further purification, such as removal of the desorbed molecules. For example, a condensation step could advantageously remove desorbed water molecules.

At some point, preferably before break-through of $CO_2$, the reactor is subjected to a regeneration sequence, wherein it is regenerated in order to be subjected to step (a) again. It is thus preferred that the process according to the invention is operated in cyclic mode. The regeneration sequence involves steps (b) - (e). The regeneration may be referred to as a pressure swing adsorption (PSA).

*Step (b): Rinse*

Rinse step (b) is the first step of the regeneration sequence, wherein steam is fed to the SEWGS reactor to establish a pressure between 5 and 50 bar. At these conditions, water molecules are adsorbed onto the sorbent, while $CO_2$ molecules are desorbed, releasing $CO_2$ into the gas phase of the reactor. At the beginning of step (b), the gaseous volume of the reactor will mainly contain $H_2$ and possible non-sorbed $CO_2$ molecules.

At the very beginning of step (b), the off-gas may contain predominantly $H_2$, and may optionally be collected together with the $H_2$ product stream obtained during step (a). The skilled person is able to determine when the stop collecting the $H_2$ product stream, and switch to separate collection of the off-gas. In a preferred embodiment, the switch to separate off-gas collection is made at the start of step (b), which is particularly advantageous in case the reactor is switched from step (a) to step (b) close to break-through of $CO_2$.

Preferably, the rinse of step (b) is performed at substantially the same pressure as the reaction of step (a), although a slight pressure change (typically a slight increase) may occur in view of the introduction of steam. The pressure during step (b) typically is in the range of 20 - 50 bar, preferably in the range of 22 - 28 bar, more preferably in the range of 24 - 26 bar. The amount of steam that is fed into the SEWGS reactor during rinse step (b) can be lowered compared to conventional processes not including a pre-blowdown step. The amount of steam may be in the range of 0.01 - 0.5 mol%, preferably 0.02 - 0.2 mol% or even as low as 0.02 - 0.1 mol%, based on the amount of $CO_x$ feed during step (a). The inventors have obtained optimal results in terms of $CO_2$ purity and carbon capture rate with such low amounts of steam.

*Step (c): Pre-blowdown*

The process according to the invention incorporates a pre-blowdown step in a SEWGS process, which represents an intermediate step enabling the collection of impurities before the actual blowdown step. The pre-blowdown step thereby also allows for a simultaneous improvement of the carbon capture ratio (CCR; i.e. the extent of incoming carbon atoms that are captured as $CO_2$ in the $CO_2$ product stream) and the carbon dioxide purity (CP) in the $CO_2$ product

stream.

During the pre-blowdown step, the pressure within the reactor is lowered to establish a blowdown pressure in the range of 0.5 to 1.5 times the partial pressure of $CO_x$ in the feed gas of step (a). The actual pressure reduction achieved in the pre-blowdown step may vary depending on the starting pressure after the rinse and optional depressurizing steps, and the partial pressure of $CO_x$ in the feed gas. For example, the pressure may be reduced by 1 - 25 bar, preferably by 2 - 8 bar, more preferably by 3 - 5 bar. In view of this pressure reduction, the actual blowdown step starts at a lower pressure compared to conventional regeneration sequences of a water-gas shift reactor. The pre-blowdown step differs from a depressurization step in the context of pressure equalisation in that the released gas is not kept in the pressure equalisation cycle, but instead is collected separately, as a pre-blowdown off-gas. The pre-blowdown off-gas may contain a combination of some remaining $H_2$ still present in the reactor, non-adsorbed $H_2O$, desorbed $CO_2$ and any further component (e.g. inert gases) that may be present in the feed and/or the steam rinse gas of step (b). Thus, the pre-blowdown off-gas is lean in $CO_2$ but rich in energy.

A further advantage over existing SEWGS processes is that the incorporation of the pre-blowdown step does not require any additional rinse steam and also does not require any additional pressure equalisation steps, as the actual blowdown step starts at a lower pressure. The pre-blowdown step is hence similar to the blowdown step in that gas in the SEWGS reactor is released by lowering the pressure, without using a purge gas. An important difference is that the gas released in the pre-blowdown step and the gas released in the blowdown step are collected separately. The pre-blowdown step has the advantage that the product gas from the blowdown step is of better quality, i.e. has a higher CP, and additionally provides increased control of the exact pressure at which the blowdown step is performed. In view of the pre-blowdown step, the process according to the invention does not need to employ multiple purging steps, but instead uses a pre-blowdown step and the actual blowdown step, which is technically simpler to realise, and having the additional advantage of increased control of the starting pressure of the blowdown step.

Typically, the pre-blowdown step is preceded by one or more depressurizing steps. Those are typically paired with pressurizing steps which may occur after the purge step, as part of one or more pressure equalizing steps. The skilled person is familiar with pressure equalizing steps in the context of a pressure swing adsorption regeneration sequence. Advantageously, the carbon purity can be enhanced by introducing pressure equalisation steps which effect depressurisation of the SEWGS reactor directly after the rinse step (b) which leads to a decreased initial blowdown pressure. Generally, a high blowdown pressure, i.e. the pressure at which the blowdown step and the collection of the $CO_2$ product stream starts, causes a relatively larger amount of impurities in the $CO_2$ product stream, which hamper proper capture of the $CO_2$. Furthermore, any $H_2$ molecule that ends up in the $CO_2$ product stream reduces the $H_2$ yield of the process.

During the pre-blowdown step, the pressure within the reactor is reduced, typically by 2 - 8 bar, preferably by 3 - 5 bar. The pre-blowdown step typically starts at a pressure in the range of 5 - 20 bar, preferably in the range of 8 - 16 bar, at which pressure gas is released from the reactor and collected separately as a pre-blowdown off-gas. During pre-blowdown, no gas enters the reactor and all release of gas is caused by the pressure release. At a certain pressure, the blowdown pressure, the off-gas collection is switched and the $CO_2$ product stream is collected. This event marks the switch from the pre-blowdown step to the blowdown step. The blowdown pressure is typically in the range of 0.5 - 1.5 times the partial pressure of $CO_x$ in the feed gas of step (a), preferably in the range of 0.8 - 1.2 times the partial pressure of $CO_x$ in the feed gas. It is especially preferred that the blowdown pressure is about equal to the partial pressure of $CO_x$ in the feed gas. Thus, in case the feed gas of step (a) would contain 2 bar of CO and 2 bar of $CO_2$, it is preferred that the blowdown pressure, i.e. the pressure in the reactor at which the collection of the $CO_2$ product stream starts, is about 4 bar. Additionally or alternatively, the blowdown pressure is defined in absolute terms. In one embodiment, the blowdown pressure is in the range of 2 - 10 bar, preferably 3 - 7 bar, most preferably about 4 bar.

Lower blowdown pressures lead to an even more pure $CO_2$ product stream, but also to an increased release of $CO_2$ into the pre-blowdown off-gas and thus in a lowered carbon capture ratio. Higher blowdown pressures lead to less $CO_2$ released into the pre-blowdown off-gas and thus in an increased carbon capture ratio, but also to reduced purity of the $CO_2$ product stream. The inventors found that the blowdown pressures presented here provide the optimal balance, such that the SEWGS process according to the invention provides an unprecedented combination of $CO_2$ product stream purity and carbon capture ratios at a given steam usage.

The off gas of the pre-blowdown step may be used as deemed fit. As this gas contains a combination of gaseous molecules that are useful within the process, it is preferred that the pre-blowdown off gas is subjected to reaction step (a). This may be effected by combining the pre-blowdown off gas with the feed of step (a), and subjecting the combined mixture to the reactor in step (a), of by separately introducing the feed of step (a) and the pre-blowdown off gas to the reactor of step (a). As such, $H_2$ molecules present in the pre-blowdown off gas will end up in the $H_2$ product stream and $CO_2$ molecules present in the pre-blowdown off gas will end up in the $CO_2$ product stream. Preferably, $H_2O$ molecules are removed from the pre-blowdown off gas before it is subjected to step (a), typically by condensation, to lower the volume that is to be subjected to step (a). Since the pre-blowdown off gas contains gases from a pressure drop of 2 - 8 bar, of which $H_2O$ molecules may further have been removed, it is a relatively small stream, which does not reduce the capacity of the reactor in step (a) too much.

In an alternative embodiment, the pre-blowdown off gas is separately collected as tail gas, e.g. as a product stream of the process, and used as deemed fit. Process integration options can preferably make use of the particular composition of this stream. For example, it may be combusted to generate heat needed for the process according to the invention. The presence of steam in this stream may be beneficial for control of the $NO_x$ emissions as shown by Chiesa P, Lozza G & Mazzocchi L (2005), Using hydrogen as gas turbine fuel, J. Eng. Gas Turbines Power 127(1), 73-80; and Göke S, Füri M, Bourque G, Bobusch B, Göckeler K, Krüger O et al. (2013), Influence of steam dilution on the combustion of natural gas and hydrogen in premixed and rich-quench-lean combustors, Fuel processing technology 107, 14-22. A further advantage is that steam dilution of $H_2$ also allows to lower the reactivity of hydrogen, because already a relatively low steam content prevents flashback, and thus reduces the risk of explosion.

In case the pre-blowdown off gas is recompressed and recycled to step (a), the presence of $CO_2$ in the pre-blowdown off gas does not lead to a reduction in carbon capture ratio, since the $CO_2$ molecules are not collected but recycled and will thus largely end up in the $CO_2$ product stream anyway. Thus, a slightly lower blowdown pressure, preferably in the range of 2 - 4 bar, preferably about 3 bar, can be used in order to increase the purity of the $CO_2$ product stream. On the other hand, in case the pre-blowdown off gas is collected as tail gas, it is preferred that it contains as little as possible $CO_2$, and thus a somewhat higher blowdown pressure, preferably in the range of 3 - 8 bar, preferably about 5 bar, is preferred in order to increase the carbon capture ratio of the process according to the invention. Alternatively worded, the blowdown pressure is in the range of 0.5 - 1.25, preferably 0.5 - 1, times the partial pressure of CO and $CO_2$ in the feed gas of step (a) when the pre-blowdown off gas is recompressed and recycled to step (a), and the blowdown pressure is in the range of 0.75 - 1.5, preferably 1 - 1.5, times the partial pressure of CO and $CO_2$ in the feed gas of step (a) when the pre-blowdown off gas is collected as tail gas.

*Step (d): Blowdown*

Step (d) of the process according to the invention involves the actual blowdown step, wherein the $CO_2$ product stream is collected. In order to facilitate carbon capture processes, the purity of this stream should be as high as possible, and the intermediate pre-blowdown step enables higher purities of the stream. The blowdown step of the present invention differs from conventional blowdown steps in that it starts at a somewhat reduced pressure, in view of the pressure released from the reactor during the pre-blowdown step (c).

Thus, the blowdown pressure, at which the blowdown step starts, is typically in the range of 2 - 10 bar, preferably 3 - 7 bar, most preferably about 4 bar. During the blowdown step, the pressure is further reduced to the regeneration pressure, which is in the range of 1 - 5 bar, preferably in the range of 1.5 - 3 bar. The pressure drop during the blowdown step is preferably in the range of 0.2 - 7.5 bar, more preferably in the range of 0.5 - 5 bar, most preferably about 1 bar. During blowdown, gaseous $CO_2$ molecules present in the reactor are released into $CO_2$ product stream. Furthermore, the release of any remaining adsorbed $CO_2$ molecule from the sorbent is promoted in view of the drop in $CO_2$ pressure within the reactor. As such, $CO_2$ is released from the reactor to a large extent, and the $CO_2$ product stream is substantially pure. When desired, a water condensation step can be employed in order to increase the $CO_2$ concentration of the $CO_2$ product stream. This is common practice for carbon capture and storage processes.

*Step (e): Purge*

The process continues with a purge step, wherein steam is fed to the reactor. The introduction of steam leads to a lowering of the partial pressure of $CO_2$ within the reactor and thus to the release of further $CO_2$ molecules from the sorbent. During the purge step, pressure is typically not built up in the reactor, but the reactor remains at the regeneration pressure and an off-gas is collected. Typically, the off-gas of the purge step is collected as part of the $CO_2$ product stream. It contains mainly $CO_2$ and some non-adsorbed $H_2O$ molecules (steam).

At the end of the purge step, the sorbent is loaded with $H_2O$ molecules, and is ready for another reaction step. In a further preferred embodiment, the process according to the invention further comprises one or more repressurisation steps, which are performed after the purge step (e) and in which the pressure in the reactor is raised to the pressure of reaction step (a). If needed, the pressure of the feed or high-pressure product ensures that the reactor is pressurized to the desired pressure in order to perform step (a). Such repressurisation steps preferably are coupled to the depressurisation steps performed before the pre-blowdown step (c), as part of one or more pressure equalisation steps.

In a preferred embodiment, the process according to the invention is run as a cycle. When run as a cycle, the reactor at the end of the purge step (e) and preferably after being repressurised, is used in reaction step (a), wherein a feed gas comprising CO and $H_2O$ is fed into the reactor. In a further embodiment, when the process according to the invention is run as a cycle, at least two SEWGS reactors each undergoing the cycle are coupled. Preferably, at least 4 SEWGS reactors are coupled, such as 2 - 20 reactors, preferably 4 - 10 reactors. As such, one reactor is used for reaction step (a) while a second reaction is undergoing the regeneration sequence, which enables a continuous feed of the feed comprising CO and $H_2$. It is further preferred that one SEWGS reactor requiring depressurisation is coupled to another SEWGS reactor requiring repressurisation, thereby allowing one or more pressure equalisation steps which effect depressurisation of the first SEWGS reactor after the rinse step (b), and one or more respective pressure equalisation steps which effect repressurisation of the second SEWGS reactor directly after the purge step (e). In a more preferred embodiment, when the process according to the invention is run as a cycle, a multitude of SEWGS reactors each undergoing the cycle are coupled, wherein each of the multiple first SEWGS reactors requiring depressurisation is coupled to one of the multiple second SEWGS reactors in another step of the cycle requiring repressurisation, thereby allowing one or more pressure equalisation steps which effect depressurisation of the multiple first SEWGS reactors after the rinse step (b), and one or more respective pressure equalisation steps which effect repressurisation of the multiple second SEWGS reactors directly after the purge step (e).

In a preferred embodiment of the process according to the invention, the reactor undergoes the reaction step (a), the rinse step (b), the pre-blowdown step (c), the blowdown step (d), and the purge step (e), and optionally one or more intermediate pressure equalisation steps, in sequential order, preferably without substantial modification of the reactor by intermediate steps.

Reactors suitable for performing a SEWGS reaction are known in the art, and any such reactor may be employed for the process according to the invention. Typically, such a reactor is in the form of a column containing the sorbent material and catalyst, which may be present as fixed bed or fluidized bed. Suitable catalyst and sorbent materials are also known in the art, and any such material may be used in the context of the present invention.

Process for separating a $CO_2$ product stream

The inventive idea of the present invention can also be employed in a process for the separation of a $CO_2$ product stream from an inert gas product stream. Since water gas shift reactivity is not essential for the process according to this embodiment, the process is typically carried out in an adsorber (or adsorption column), which comprises a sorbent material capable of adsorbing $CO_2$. Step (a) does not involve a reaction but only an adsorption and is thus referred to as an adsorption step. All other specifics, including preferred embodiments, as defined above for reaction step (a) equally apply to adsorption step (a). Likewise, all specifics for steps (b) - (e), including preferred embodiments, as defined above equally apply to the respective steps of the process according to the present embodiment.

The process according to this embodiment comprises:

(a) an adsorption step, wherein a feed gas comprising $CO_2$ and one or more inert gases is fed into an adsorber containing a sorbent material capable of adsorbing $CO_2$, thereby forming the inert gas product stream and a sorbent material loaded with $CO_2$;
(b) a rinse step, wherein steam is fed to the adsorber, thereby establishing a pressure in the range of 5 - 50 bar;
(c) a pre-blowdown step, wherein the pressure in the adsorber is reduced to establish a blowdown pressure in the range of 0.5 - 1.5 times the partial pressure of CO and $CO_2$ in the feed gas of step (a);
(d) a blowdown step, wherein the pressure in the adsorber is reduced to the regeneration pressure in the range of 1 - 5 bar, thereby releasing at least part of the $CO_2$ from the loaded sorbent material, thereby forming the $CO_2$ product stream; and
(e) a purge step, wherein steam is fed to the adsorber, thereby releasing further $CO_2$ molecules from the adsorber, wherein the off gas released from the reactor during step (c) is collected separately from the $CO_2$ product stream released from the reactor during step (d).

The adsorption according to the present embodiment utilizes steam as working fluid. The feedstock of the process according to this embodiment is a gaseous mixture comprising $CO_2$ and one or more inert gases. Herein, inert gases refers to gases that are not adsorbed by the sorbent, and thus exclude $CO_2$ and $H_2O$. CO may be part of the inert gases. If this is the case, it has an influence on the blowdown pressure established in step (c), as defined above. The one or more inert gases are typically selected from CO, $H_2$, $N_2$, Ar, $C_{1-4}$ hydrocarbons, $H_2S$ and $NO_x$. Most preferably, the inert gases comprise at least $H_2$.

**Examples**

*Packed-bed and intraparticle model*

The isotherm SEWGS model developed by Boon et al. (Boon, J., Cobden, P. D., Van Dijk, H. A. J., Hoogland, C., van Selow, E. V., & van Sint Annaland, M. (2014), Isotherm model for high-temperature, high-pressure adsorption of CO2 and H2O on K-promoted hydrotalcite, Chemical Engineering Journal, 248, 406-414.) was used to describe the transport phenomena in the packed-bed column and adsorption of $CO_2$ as $H_2O$ (Tables 1 and 2). The double adsorption

isotherms for $CO_2$ and $H_2O$ in Boon's model consisted of both surface as nanopores contributions. However, the sorption mechanism proposed by Coenen et al. 2017 (Coenen, K., Gallucci, F., Pio, G., Cobden, P., van Dijk, E., Hensen, E. & van Sint Annaland, M. (2017), On the influence of steam on the CO2 chemisorption capacity of a hydrotalcite-based adsorbent for SEWGS applications, Chemical Engineering Journal, 314, 554-569) also predicts that a competitive site contributes to the adsorption of $CO_2$. In this study, the competitive site has been incorporated into the adsorption isotherms for both $CO_2$ and $H_2O$. Furthermore, only the adsorption of $CO_2$ and $H_2O$ has been considered in this work. Any other gas species in the syngas mixture are not considered to be adsorbed by K-HTC.

*Table 1: Packed-bed column*

| | |
|---|---|
| Continuity: | $\frac{\partial \rho}{\partial t} = -\frac{\partial \rho v}{\partial z} + \frac{1-\epsilon_b}{\epsilon_b} a_p \sum_i M_i N_i$ |
| Momentum: | $0 = -\frac{\partial p}{\partial z} - f \frac{\rho\|u\|u}{d_p}$ |
| Heat balance: | $\left(\epsilon_b \rho C_p + (1-\epsilon_b)\rho_p C_{p,p}\right)\frac{\partial T}{\partial t} =$ $-\rho C_p u \frac{\partial T}{\partial t} + \frac{\partial}{\partial z}\left(\lambda \frac{\partial T}{\partial z}\right) + \frac{4U(T_w - T)}{d_c} - (1-\epsilon_b)\rho_p \left((-\Delta H_r)r_{WGS} + \sum_i \left(-\Delta H_{a,i}\frac{d\langle q_i \rangle}{dt}\right)\right)$ |
| Mass balance: | $\frac{\partial(\rho\omega_i)}{\partial t} = \frac{\partial \rho v \omega_i}{\partial z} + \frac{\partial}{\partial z}\left(D_z \rho \frac{\partial \omega_i}{\partial z}\right) + \frac{1-\epsilon_b}{\epsilon_b} a_p M_i N_i$ |

*Table 2: Intra-particle model*

| | |
|---|---|
| Mass balance: | $\frac{d\langle c_i \rangle}{dt} = k_{LDF,i}\left(c_{int,i} - \langle c_i \rangle\right)$ |
| LDF mass transfer coefficient: | $k_{LDF,i} = \frac{15\mathcal{D}_{p,i}}{r_p^2\left(\epsilon_p - \rho_p \frac{\partial q_i}{\partial c_i}\right)}$ |
| Multicomponent isotherm: | $\langle q_i \rangle = f(\langle c_{i...N} \rangle)$ |

## Numerical solution strategy

Boundary conditions: The pressure was defined at the outlet of the column while the feed flowrate is defined at the inlet. The equations were discretized on a uniform grid in the spatial term. To prevent numerical shock problems, a second order flux delimited Barton's scheme for the convective terms was implemented in the code (Centrella, J. & Wilson, J. R. (1984), Planar numerical cosmology II - The difference equations and numerical tests, The Astrophysical Journal Supplement Series, 54, 229-249; Goldschmidt, M. J. V., Kuipers, J. A. M., & van Swaaij, W. P. M. (2001), Hydrodynamic modelling of dense gas-fluidised beds using the kinetic theory of granular flow: effect of coefficient of restitution on bed dynamics, Chemical Engineering Science, 56(2), 571-578; Boon, J., Cobden, P. D., Van Dijk, H. A. J., Hoogland, C., van Selow, E. V., & van Sint Annaland, M. (2014), Isotherm model for high-temperature, high-pressure adsorption of CO2 and H2O on K-promoted hydrotalcite, Chemical Engineering Journal, 248, 406-414.). For the dispersion terms a second order implicit central differencing scheme applied. The source terms were semi-implicit linearized. Dankwert's boundary conditions applied for the mass and heat balance.

Integration scheme: The now time-dependent ODEs were solved with an Euler forward scheme with time step adaption. Adaptation of the time step occurs in three cases. Firstly, when the maximum number of iterations occurred to obtain the lowest error. Secondly, if large changes occur between the initial steady-state solution and the current solution. Large changes are defined as the differences between these two states. Thirdly, if the Courant-Friederich-Lewy (CFL) condition, C, becomes higher than 0,5, the timestep was adjusted to meet C < 0,5. The CFL condition is calculated according to *C = u dt/dz* in which dt is the timestep, dz the spatial stepsize, and u the velocity

Cyclic simulations: several different cycles were simulated. In the following sections the specific processing parameters and boundary conditions are given. All cycles were simulated in time as an extension of the single column model. Any connecting step in a cycle were temporarily stored in files. As the SEWGS process is a cyclic process, the simulations continues for several cycles until a cyclic steady state is reached. This state is reached when the performance indicators CCR and CP do not change more than 5%. The number of cycles that needs the be simulated depends on the applied conditions for the column. Typically, a minimum of 15 cycles was required.

Data interpretation: For all models a set of performance indicators were determined. For the SEWGS process in general these indicators are the carbon capture and recovery ratio and the $CO_2$ purity. The cycle performance indicated is indicated by the productivity, steam consumption, CO conversion, $CO_2$ adsorption ratio. For all cases $y_i$ and $F_{mol}$ are the integrals over time in given step. The integrals are approximated by the trapezoidal rule.

$$CCR = \frac{\left(\left(y_{CO_2} + y_{CO}\right)F_{mol}\right)_{CO_2\ product}}{\left(\left(y_{CO_2} + y_{CO}\right)F_{mol}\right)_{syngas\ feed}} \qquad (3.1)$$

$$CP = y_{CO_2,CO_2\ product} \qquad (3.2)$$

$$Prod. = \frac{\left(y_{CO_2}F_{mol}\right)_{CO_2\ product}}{mass\ adsorbent \cdot t_{cycle}} \qquad (3.3)$$

$$CO\ conv. = 1 - \frac{\left(y_{CO}F_{mol}\right)_{CO_2\ product} + \left(y_{CO}F_{mol}\right)_{H_2\ product}}{\left(y_{CO}F_{mol}\right)_{syngas\ feed}} \qquad (3.4)$$

$$CO_2\ ads.ratio = \frac{\left(y_{CO_2}F_{mol}\right)_{H_2\ product}}{\left(y_{CO_2}F_{mol}\right)_{syngas\ feed}} \qquad (3.5)$$

**Example 1**

A process consisting of adsorption, rinse (with S/C = 0.05), 3 pressure equalisations, pre-blowdown, blowdown, purge (with S/C = 1.25) and repressurisation at cyclic steady-state was simulated. The accompanying cycle design corresponds to a single train system of 7 columns. The feed composition is shown in the table below:

| Component | mol% |
|---|---|
| $H_2O$ | 25.73% |
| $H_2$ | 54.69% |
| CO | 3.43% |
| $CO_2$ | 12.67% |
| $N_2$ | 3.48% |

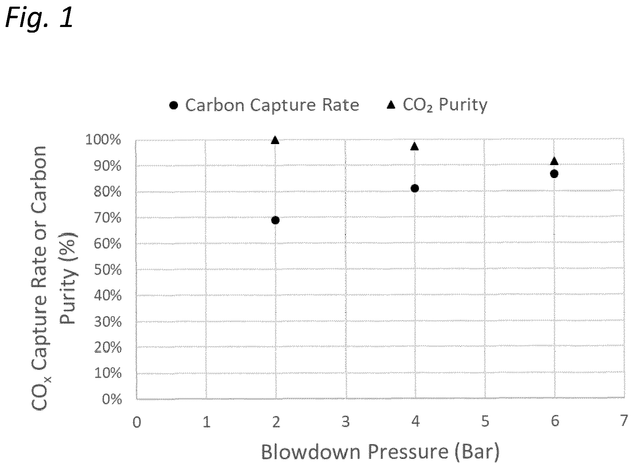

The total feed flowrate is 3.42 kmol/h. In the simulations, the blowdown pressure, which is established at the end of the pre-blowdown phase, is set at 6 bar (Example 1A), 4 bar (Example 1B) or 6 bar (Example 1C), with a pre-blowdown pressure resulting from the pressure equalisations at 7.8 bar. The result of this variation and its effect on the carbon capture ratio (CCR) and the $CO_2$ purity (CP) is shown in Figure 1. CCR, CP and S/C are defined as shown below. This form of definition considers that the pre-blowdown product as not captured.

$$CCR = \frac{\left(\left(y_{CO_2} + y_{CO}\right)F_{mol}\right)_{CO_2\ Blowdown} + \left(\left(y_{CO_2} + y_{CO}\right)F_{mol}\right)_{CO_2\ Purge}}{\left(\left(y_{CO_2} + y_{CO}\right)F_{mol}\right)_{syngas\ feed}}$$

$$CP = \left(\frac{y_{CO_2}}{1 - y_{H_2O}}\right)_{CO2\ Product}$$

$$\frac{S}{C} = \frac{Total\ H_2O\ fed\ during\ Purge\ or\ Rinse}{Total\ COx\ fed\ during\ feed}$$

Simulations confirmed that the same performance in terms of CCR and CP can be reached using a cycle design without a pre-blowdown step, albeit at a significantly higher steam consumption (OpEx) and a higher number of columns and trains (CapEx). Compared to the pre-blowdown cycle at a pre-blow-down pressure of 4 bar (Example 1B), achieving a $CO_2$ purity of 97% and Carbon Capture Rate of 81% with 7 columns in a single train system and a total steam consumption of 1.25 S/C, a cycle design without pre-blowdown would require a steam consumption of 1.4 S/C and the double amount of columns. Therefore, a comparable performance of requires 12% higher steam consumption and 100% increase in CAPEX.

**Example 2**

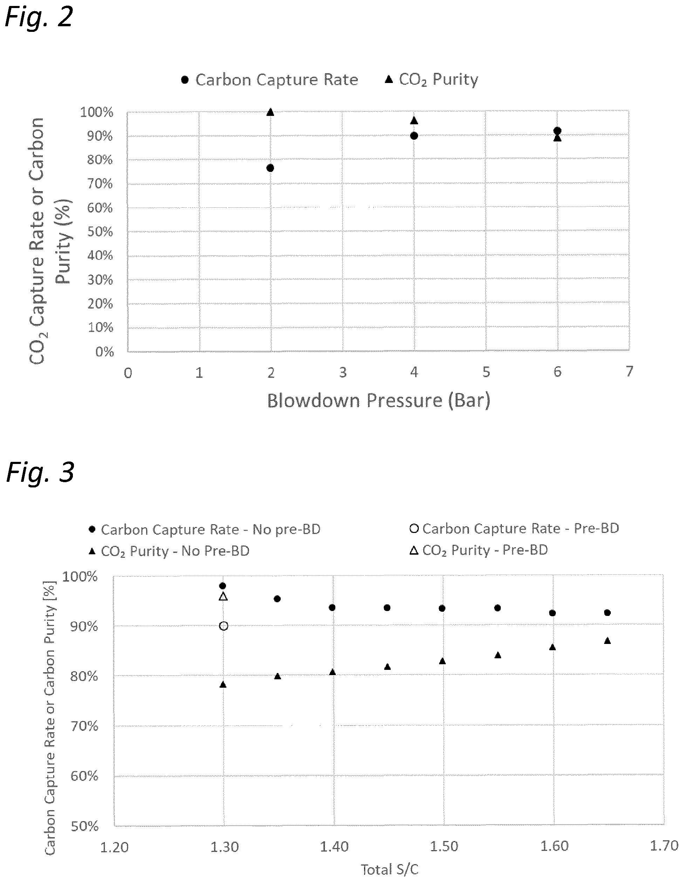

The same composition as Example 1 was simulated but with the pre-blowdown step being introduced into a system that is processing half the flowrate, i.e. 1.71 kmol/h. The blowdown pressure was varied between 2 and 8 bar. The result of this is shown in Figure 2. An optimum of 90% CCR and 96% purity is achieved at a blowdown pressure of 4 bar.
An assessment was performed to see at what steam consumption, this optimum point can be achieved by a process design without pre-blowdown step and without an increase in CAPEX (i.e. same amount of columns). The results of this assessment is shown in Figure 3, wherein the optimum at a pre-blowdown pressure of 4 bar is shown with open dots. Increasing the total S/C from 1.3 to 1.65, corresponding to steam increase during rinse from form S/C = 0.05 to S/C = 0.4 with a constant steam purge of S/C = 1.25, the $CO_2$ purity increased but the Carbon Capture Rate decreased. Even at a total S/C of 1.65, CP is not even close to 90%. At the same time, CCR has declined from 98% to 92%. This decrease is primarily due to increased $CO_2$ crossover as the result of increased rinse. The pre-blowdown step is able to trade-off Carbon Capture Rate and $CO_2$ purity in a significantly more efficient way compared to the process without pre-blowdown step.

**Claims**

1. A sorption-enhanced water-gas shift (SEWGS) process for the formation of a $CO_2$ product stream and an $H_2$ product stream, comprising:

   (a) a reaction step, wherein a feed gas comprising $CO_x$, wherein $x$ = 1 - 2, and $H_2O$ is fed into a SEWGS reactor containing a catalyst and sorbent material capable of adsorbing $CO_2$, thereby forming the $H_2$ product stream and a sorbent material loaded with $CO_2$;
   (b) a rinse step, wherein steam is fed to the SEWGS reactor, thereby establishing a pressure in the range of 5 - 50 bar;
   (c) a pre-blowdown step, wherein the pressure in the SEWGS reactor is reduced to establish a blowdown pressure in the range of 0.5 - 1.5 times the partial pressure of CO and $CO_2$ in the feed gas of step (a);
   (d) a blowdown step, wherein the pressure in the SEWGS reactor is reduced to the regeneration pressure in the range of 1 - 5 bar, thereby releasing at least part of the $CO_2$ from the loaded sorbent material, thereby forming the $CO_2$ product stream; and
   (e) a purge step, wherein steam is fed to the SEWGS reactor, thereby releasing further $CO_2$ molecules from the SEWGS reactor,
   wherein the off gas released from the reactor during step (c) is collected separately from the $CO_2$ product stream released from the reactor during step (d).

2. The process according to claim 1, wherein the feed pressure is in the range of 5 - 50 bar, and/or the blowdown pressure is in the range of 2 - 10 bar.

3. The process according to claim 1 or 2, wherein in the pre-blowdown step the pressure is reduced by 1 - 25 bar, preferably by 2 - 8 bar.

4. The process according to any of the preceding claims, wherein the feedstock contains 0 - 10 mol% CO and 0 - 80 mol% $CO_2$, wherein the total content of $CO_x$ in the feedstock is at least 2 mol%.

5. The process according to any of the preceding claims, further comprising one or more pressure equalisation steps, wherein the SEWGS reactor is depressurized directly after the rinse step (b) and the SEWGS reactor is repressurized directly after the purge step (e).

6. The process according to any of the preceding claims, wherein the process is run as a cycle, wherein the reactor is subjected to step (a) after being purged in step (e), optionally after being repressurized.

7. The process according to claim 5, wherein at least two, preferably at least four reactors undergoing the process are coupled, wherein one reactor requiring depressurisation is coupled to another reactor requiring repressurisation.

8. The process according to any of the preceding claims, wherein the blowdown pressure is in the range 3 - 7 bar, preferably the blowdown pressure is about 4 bar.

9. The process according to any of the preceding claims, wherein the off-gas of the pre-blowdown step (c) is recycled to reaction step (a) or collected as tail gas.

10. The process according to claim 9, wherein the off-gas of the pre-blowdown step (c) is recycled to reaction step (a) and the blowdown pressure is in the range of 2 - 4 bar, preferably wherein the blowdown pressure is about 3 bar.

11. The process according to claim 9, wherein the off-gas of the pre-blowdown step (c) is collected as tail gas and the blowdown pressure is in the range of 3 - 8 bar, preferably wherein the blowdown pressure is about 5 bar.

12. A process for the separation of a $CO_2$ product stream from an inert gas product stream, comprising:

(a) an adsorption step, wherein a feed gas comprising $CO_2$ and one or more inert gases is fed into an adsorber containing a sorbent material capable of adsorbing $CO_2$, thereby forming the inert gas product stream and a sorbent material loaded with $CO_2$;
(b) a rinse step, wherein steam is fed to the adsorber, thereby establishing a pressure in the range of 5 - 50 bar;
(c) a pre-blowdown step, wherein the pressure in the adsorber is reduced to establish a blowdown pressure in the range of 0.5 - 1.5 times the partial pressure of CO and $CO_2$ in the feed gas of step (a);
(d) a blowdown step, wherein the pressure in the adsorber is reduced to the regeneration pressure in the range of 1 - 5 bar, thereby releasing at least part of the $CO_2$ from the loaded sorbent material, thereby forming the $CO_2$ product stream; and
(e) a purge step, wherein steam is fed to the adsorber, thereby releasing further $CO_2$ molecules from the adsorber, wherein the off gas released from the reactor during step (c) is collected separately from the $CO_2$ product stream released from the reactor during step (d).

13. The process according to claim 11, wherein the one or more inert gases are selected from CO, $H_2$, $N_2$, Ar, $C_{1-4}$ hydrocarbons, $H_2S$ and $NO_x$.

Fig. 1

## Fig. 2

## Fig. 3

Europäisches
Patentamt

European
Patent Office

Office européen
des brevets

# EUROPEAN SEARCH REPORT

Application Number

EP 20 19 5765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 604 210 A1 (TNO [NL]) 5 February 2020 (2020-02-05) * paragraphs [0017] - [0021] * | 1-11 | INV. C01B3/12 B01D53/047 C01B3/56 |
| Y | RICK REIJERS ET AL: "SEWGS process cycle optimization", ENERGY PROCEDIA, vol. 4, 2011, pages 1155-1161, XP028213028, ISSN: 1876-6102, DOI: 10.1016/J.EGYPRO.2011.01.168 [retrieved on 2011-04-01] * abstract * * 2. SEWGS Process Cycle * * figure 2 * | 1-11 | C01B32/50 |
| X | US 10 350 538 B2 (EXXONMOBIL RES & ENG CO [US]) 16 July 2019 (2019-07-16) | 12,13 | |
| Y | * abstract * * claims 1,6,7 * * column 1, line 66 - column 2, line 12 * * column 8, lines 36-51 * * column 14, lines 65-67 * * column 19, line 16 - line 7, paragraph 20 * | 1-11 | |
| A | US 2015/014595 A1 (VAN DIJK HENDRICUS ADRIANUS JOHANNES [NL] ET AL) 15 January 2015 (2015-01-15) * abstract * * claims 18-22,31,36 * * paragraphs [0011], [0020], [0024], [0026] * | 1-13 | |

TECHNICAL FIELDS
SEARCHED      (IPC)

C01B
B01D

The present search report has been drawn up for all claims

| Place of search | Date of completion of the search | Examiner |
|---|---|---|
| Munich | 17 February 2021 | Alvarez Rodriguez, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**EP 3 967 653 A1**

## ANNEX TO THE EUROPEAN SEARCH REPORT
## ON EUROPEAN PATENT APPLICATION NO.

EP 20 19 5765

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2021

| Patent document cited in search report | | | Publication date | Patent family member(s) | | Publication date |
|---|---|---|---|---|---|---|
| EP 3604210 | | A1 | 05-02-2020 | EP | 3604210 A1 | 05-02-2020 |
| | | | | WO | 2020025815 A1 | 06-02-2020 |
| US 10350538 | | B2 | 16-07-2019 | US | 2018036674 A1 | 08-02-2018 |
| | | | | WO | 2018026518 A1 | 08-02-2018 |
| US 2015014595 | | A1 | 15-01-2015 | AU | 2013221020 A1 | 21-08-2014 |
| | | | | CN | 104203810 A | 10-12-2014 |
| | | | | EP | 2814775 A1 | 24-12-2014 |
| | | | | KR | 20140126326 A | 30-10-2014 |
| | | | | NL | 2008313 C2 | 02-09-2013 |
| | | | | US | 2015014595 A1 | 15-01-2015 |
| | | | | WO | 2013122467 A1 | 22-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010059055 A
- EP 2362848 A
- EP 2739373 A
- WO 2013122467 A


**Non-patent literature cited in the description**

- **BOON et al.** *Chemical Engineering Science,* 2015, vol. 122, 219-231
- **CHIESA P ; LOZZA G ; MAZZOCCHI L.** Using hydrogen as gas turbine fuel. *J. Eng. Gas Turbines Power,* 2005, vol. 127 (1), 73-80
- **GÖKE S ; FÜRI M ; BOURQUE G ; BOBUSCH B ; GÖCKELER K ; KRÜGER O et al.** Influence of steam dilution on the combustion of natural gas and hydrogen in premixed and rich-quench-lean combustors. *Fuel processing technology,* 2013, vol. 107, 14-22
- **BOON, J. ; COBDEN, P. D. ; VAN DIJK, H. A. J. ; HOOGLAND, C. ; VAN SELOW, E. V. ; VAN SINT ANNALAND, M.** Isotherm model for high-temperature, high-pressure adsorption of CO2 and H2O on K-promoted hydrotalcite. *Chemical Engineering Journal,* 2014, vol. 248, 406-414
- **COENEN, K. ; GALLUCCI, F. ; PIO, G. ; COBDEN, P. ; VAN DIJK, E. ; HENSEN, E. ; VAN SINT ANNALAND, M.** On the influence of steam on the CO2 chemisorption capacity of a hydrotalcite-based adsorbent for SEWGS applications. *Chemical Engineering Journal,* 2017, vol. 314, 554-569
- **CENTRELLA, J. ; WILSON, J. R.** Planar numerical cosmology II - The difference equations and numerical tests. *The Astrophysical Journal Supplement Series,* 1984, vol. 54, 229-249
- **GOLDSCHMIDT, M. J. V. ; KUIPERS, J. A. M. ; VAN SWAAIJ, W. P. M.** Hydrodynamic modelling of dense gas-fluidised beds using the kinetic theory of granular flow: effect of coefficient of restitution on bed dynamics. *Chemical Engineering Science,* 2001, vol. 56 (2), 571-578